# EUROPÄISCHE PATENTSCHRIFT

(11) **EP 0 759 180 B1**
(45) Veröffentlichungstag und Bekanntmachung des Hinweises auf die Patenterteilung: **20.05.1998**
(21) Anmeldenummer: 95916495.5
(22) Anmeldetag: 26.04.1995
(51) Int. Cl.: G02B 6/44

(54) **KASSETTE**
HOLDER
BOITIER

(30) Priorität: 02.05.1994 AT 916/94
(43) Veröffentlichungstag der Anmeldung: 26.02.1997
(73) Patentinhaber: FELTEN & GUILLEAUME AUSTRIA AG, 3943 Schrems-Eugenia 1 (AT)
(72) Erfinder: BOGG, Walter, 3841 Kottschallings (AT)
(74) Vertreter: Hehenberger, Reinhard, Dipl.-Ing.
(86) Internationale Anmeldenummer: AT9500081
(87) Internationale Veröffentlichungsnummer: WO9530165

(56) Entgegenhaltungen:
- EP-A- 0 185 923
- EP-A- 0 331 402
- EP-A- 0 557 187
- DE-A- 4 106 171
- DE-U- 8 411 159
- DE-U- 9 317 760
- DE-U- 9 318 741
- FR-A- 2 567 657

## Beschreibung

Die Erfindung betrifft eine Kassette für die Ablage von wenigstens einem Spleiß von Licht-wellenleitern, mit den Merkmalen des einleitenden Teils von Anspruch 1.

Aus der EP 185 923 A ist eine Spleißkassette bekannt, die Ablageräume für die zu dem Spleiß führenden Lichtwellenleiter aufweist. Bei der EP 185 923 A sind ortsfeste Zungen vorgesehen, über welche Ablageräume der Spleißkassette nach oben hin begrenzt werden. Alle Zungen weisen einen einheitlichen Abstand vom Boden der bekannten Spleißkassette auf, so daß dort kein "Faserlabyrinth" vorliegt. Vielmehr werden bei der EP 185 923 A Ablageräume durch Verdrehen von drehbaren Körpern, die Zungen tragen, nach oben hin verschlossen, indem die von den drehbaren Körpern abstehenden Zungen nach dem Einlegen der Lichtwellenleiter gegenüber den ortsfesten Zungen so ausgerichtet werden, daß sich die freien Enden der Zungen berühren.

Der Erfindung liegt die Aufgabe zugrunde, eine Kassette zur Verfügung zu stellen, die eine universelle Spleißablage für Lichtwellenleiter erlaubt und bei leichtem Einlegen der Lichtwellenleiter einen sicheren Halt derselben in der Kassette gewährleistet.

Gemäß der Erfindung wird dies bei einer Kassette der eingangs genannten Gattung durch die Merkmale des unabhängigen Anspruches 1 erreicht.

Durch die Ausbildung der erfindungsgemäßen Kassette können Lichtwellenleiter geordnet abgelegt werden, wobei durch die besondere Konstruktion der erfindungsgemäßen Kassette der Umgang mit den bruchempfindlichen Lichtwellenleitern (Glasfasern) wesentlich vereinfacht und mögliche Gefahrenquellen ausgeschaltet sind.

Vorteilhafte und bevorzugte Ausführungsformen der Kassette gemäß der Erfindung sind Gegenstand der Unteransprüche.

Ein Ausführungsbeispiel der Kassette gemäß der Erfindung wird anhand der Zeichnungen beschrieben. Es zeigt:
Fig. 1 eine Kassette in Draufsicht,
Fig. 2 die Kassette in Seitenansicht,
Fig. 3 übereinandergelegte Kassetten,
Fig. 4 im Teilschnitt eine Einzelheit bei drei übereinandergelegten Kassetten,
Fig. 5 und 6 in verschiedenen Stellungen eine Zugentlastung,
Fig. 7 eine Einzelheit der Kassette im Bereich eines Aufnahmeraumes mit Faserlabyrinth zum Festhalten von Lichtwellenleitern,
Fig. 8 und 9 die Lasche zum Verschließen von Ablageräumen für Lichtwellenleiter in der Kassette und
Fig. 10 eine Kassette mit eingelegtem Spleiß.

Wie aus den Zeichnungen ersichtlich, hat die Kassette 1 im Ausführungsbeispiel eine im wesentlichen rechteckige Umrißform und ist im gezeigten Beispiel mit Einführungen 3 mit Zugentlastungen 5 für miteinander zu verspleißende Lichtwellenleiter, mit Aufnahmeräumen 50' für die Lichtwellenleiter, mit Halterungen für die zur Spleißstelle führenden Lichtwellenleiter, mit durch Laschen verschließbaren Ablageräumen 40 für die Lichtwellenleiter, mit einem Spleißhalter 60 und mit Vorrichtungen 20 zum Festhalten übereinandergelegter Kassetten 1 ausgestattet.

Dabei ist die erfindungsgemäße Kassette 1 in der im Beispiel gezeigten Ausführungsform eine universelle Spleißablage für alle Lichtwellenleiter.

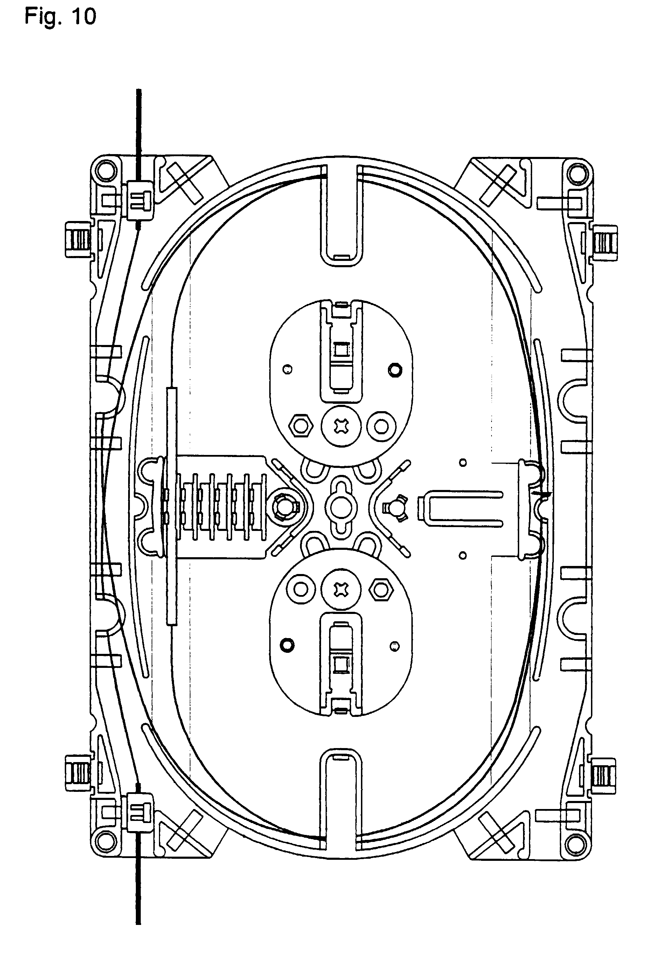

Bei der Konstruktion der Kassette 1 und ihrer Zubehörteile (wie Spleißhalterung 60 und Zugentlastung 5, sowie allenfalls Verschlußlaschen 47 für die Ablageräume 40 von Lichtwellenleitern) wurde auf eine praxisgerechte Formgebung und darauf geachtet, daß die Lichtwellenleiter (Fasern) und Spleiße (Röhrchen) getrennt geführt werden können, und daß Laschen vorgesehen sind, die ein Herausfallen der Lichtwellenleiter verhindern. Weiters weisen die Einführungen 3 für die Lichtwellenleiter in die Kassette 1 einen großen Querschnitt auf, und die Lichtwellenleiter sind in der Kassette 1 mit großen Biegeradien geführt (siehe insbesondere Fig. 10). Weiters ist durch die spezielle Zugentlastung 5 und die herausnehmbaren Spleißhalter 60 die Ablage von bis zu zehn, zwölf oder mehr Fasern in der Kassette 1 möglich.

Dadurch, daß bei der erfindungsgemäßen Kassette 1 im Ausführungsbeispiel mehrere Einführungen 3 und Befestigungsmöglichkeiten vorgesehen sind, kann die Kassette 1 den jeweiligen Anforderungen entsprechend angepaßt und verwendet werden. Auch besteht bei der erfindungsgemäßen Kassette 1 die Möglichkeit Adern und Fasern getrennt zu verlegen.

Weiters kann eine nicht gezeigte Abdeckung vorgesehen sein, um die Kassette 1 zu verschließen.

Im einzelnen ist die Kassette 1 gemäß der Erfindung im gezeigten Ausführungsbeispiel wie folgt aufgebaut.

Die Kassette 1 hat wie erwähnt, eine im wesentlichen rechteckförmige Umrißform und trägt auf einer Bodenplatte 2 verschiedene Aufbauten, die den verschiedenen Funktionen und Aufgaben der Kassette 1 entsprechen. So sind im gezeigten Ausführungsbeispiel insgesamt acht Einführungen 3 für Lichtwellenleiter vorgesehen. Im Bereich jeder Einführung 3 ist in der Bodenplatte 2 ein Schlitz 4 vorgesehen, in den eine in den Fig. 5 und 6 gezeigte Zugentlastung 5 befestigt, z.B. eingeschnappt werden kann, wenn eine solche benötigt wird.

Die Zugentlastung 5 besteht im gezeigten Beispiel aus einer Grundplatte 6, an der zwei Rastfüße 7 vorgesehen sind, die in den Schlitz 4 eingreifen. An die Grundplatte 6 schließen über zwei Filmscharniere 8 zwei weitere Teile 9 und 10 an, wobei der Teil 10 einen Rasthaken 11 trägt, der an der Grundplatte 6 der Zugentlastung 5 zum Fixieren der in Fig. 6 gezeigten Stellung verrastet werden kann.

Die Zugentlastung 5 weist Mittel (vorzugsweise einen Schaumstoffstreifen 12, der an den Teilen 6, 8 und 10 der Zugentlastung 5 befestigt ist) zur klemmenden Halterung von Lichtwellenleitern auf. Zwischen dem in der in Fig. 6 gezeigten Stellung gefalteten Schaumstoffstreifen 12 sind die Lichtwellenleiter (beispielsweise druckempfindliche Faserpigtails) festgeklemmt.

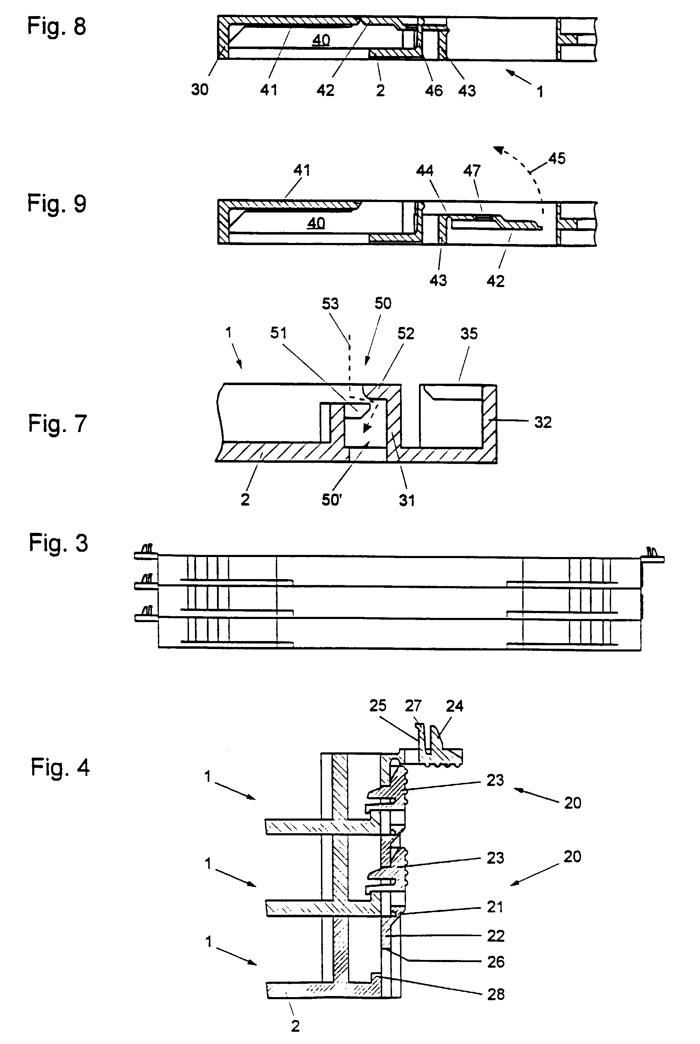

An zwei, einander diagonal gegenüberliegenden Eckbereichen der Kassette 1 sind Schnappverschlüsse 20 vorgesehen, die einen über ein Filmscharnier 21 (Fig. 4) mit der Kassette 1 und zwar mit einer an ihrem Rand vorgesehenen Wandteil 22 verschwenkbar verbundenen Schnappteil 23 aufweisen. Der Schnappteil 23 besitzt im gezeigten Ausführungsbeispiel einen keilförmigen Ansatz 24 und einen hakenförmigen Ansatz 25. In der in Fig. 4 gezeigten Raststellung, in der mit dem Schnappverschluß 20 übereinanderliegende Kassetten 1 miteinander verbunden sind, liegt der keilförmige Ansatz 24 von unten her am Rand 26 der Wand 22 an, wogegen der hakenförmige Ansatz 25 mit seinem Hakenteil 27 eine vom Boden 2 der Kassette 1 hochstehende Rippe 28 übergreift, wie dies in Fig. 4 gezeigt ist.

Andere Ausführungsformen von Schnappverschlüssen sind ebenfalls denkbar.

Fig. 3 zeigt wie mehrere Kassetten 1 (im Beispiel drei) mit Hilfe der Schnappverschlüsse 20 übereinanderliegend aneinander festgelegt werden können. Da die Schnappverschlüsse 20 einander diagonal gegenüberliegend angeordnet sind, können die Kassetten 1 auch mit ihrer Bodenplatte 2 nach oben weisend, festgelegt werden.

Gegenüber dem Außenumfang der Kassette 1 etwas nach innen versetzt, sind im Bereich der beiden Schmalseiten der Kassette 1 bogenförmige Stützwände 30 und im Bereich der Langseiten der Kassette 1 gebogene Stützwände 31 vorgesehen. Die Stützwände 30 und 31, die als von der Bodenplatte 2 abstehende Rippen ausgebildet sein können, begrenzen zusammen mit am Rand der Kassette 1 vom Boden abstehenden Rippen 32 und 33 die Einführungen 3. Um durch die Einführungen 3 eingeführte Lichtwellenleiter im Bereich zwischen den Rippen 32 und den Stützwänden 31 festzuhalten, sind von den randseitigen Wänden 32 nach innen ragende Zungen 35 vorgesehen, die mit Abstand von der Stützwand 31 enden.

Innerhalb der beiden an den Schmalseiten der Kassette 1 vorgesehenen Stützwänden 31 sind Ablageräume 40 (Fig. 8, 9) vorgesehen. Diese Ablageräume 40 dienen zum Ablegen von Lichtwellenleitern, die miteinander verspleißt sind. Die Ablageräume 40 sind auf der der Bodenplatte 2 der Kassette 1 gegenüberliegenden Seite, also nach oben hin durch eine Zunge 41 und nach unten von der Bodenplatte 2 der Kassette 1 begrenzt (Fig. 8, 9), um zu verhindern, daß Lichtwellenleiter durch Eigendrall oder bei stehender Montage der Kassette 1 aus dem Ablageraum 40 herausfallen, und damit einer Bruchgefahr ausgesetzt sind. Zusätzlich kann jeder Ablageraum 40 mit Hilfe einer Lasche 42, die wie in den Fig. 8 und 9 gezeigt, verschwenkbar ausgebildet ist, vollständig verschlossen werden.

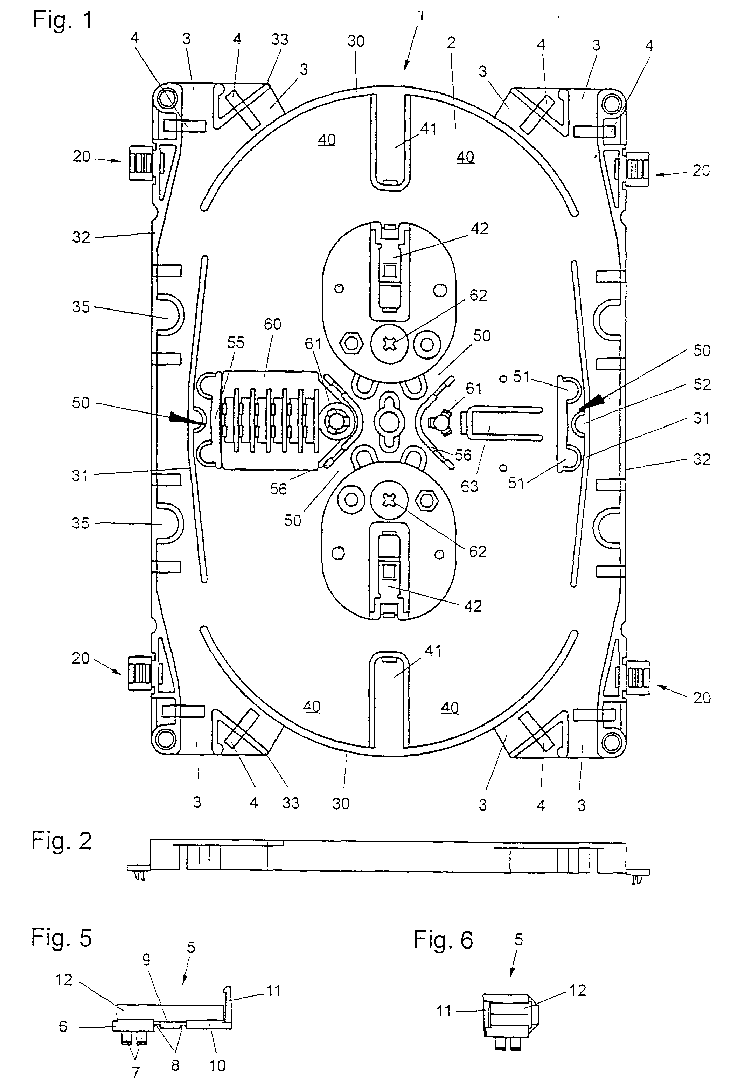

Bei dem in Fig. 1 und in den Fig. 8 und 9 gezeigten Ausführungsbeispiel ist die Lasche 42 über einen Steg 43 und über ein Filmscharnier 44 mit der Kassette 1 einstückig und verschwenkbar verbunden. Die Lasche 42 kann aus ihrer in Fig. 9 gezeigten, offenen Stellung zum Verschließen des Ablageraumes 40 in Richtung des in Fig. 9 gezeigten Pfeiles 45 in die in Fig. 8 gezeigte Stellung umgeklappt werden. In der in Fig. 8 gezeigten Stellung wird die Lasche 42 durch einen Rastfinger 46, der in eine Öffnung 47 in der Lasche 42 eingreift, festgehalten.

Anstelle einer einstückig mit der Kassette 1 ausgebildeten Lasche 42 kann auch eine als gesonderter Bauteil ausgeführte Lasche 42 verwendet werden, die mit der Kassette 1 zum Verschließen der Ablageräume 40 verrastet werden kann.

Um die zu dem Spleiß oder den Spleißen führenden Lichtwellenleiter einfach in der Kassette 1 einlegen zu können und in dieser aber auch sicher festzuhalten, sind im gezeigten Ausführungsbeispiel vier Faserlabyrinthe 50 vorgesehen. Jedes Faserlabyrinth 50 besteht aus im gezeigten Ausführungsbeispiel aus zwei Laschen 51 und einer Lasche 52. Dabei sind wie in Fig. 7 gezeigt, die Laschen 51 in geringerem Abstand von der Bodenplatte 2 der Kassette 1 angeordnet, so daß ein Lichtwellenleiter entlang des in Fig. 7 strichliert eingezeichneten Pfeiles 53 in den unter dem Faserlabyrinth 50 vorgesehenen Aufnahmeraum 50' eingelegt werden kann. So können Lichtwellenleiter ohne Bruchgefahr um die obere Lasche 52 herum unter die unteren Laschen 55 in den Aufnahmeraum 50' unter dem Faserlabyrinth 50 geschoben werden. Ein Herausfallen der Lichtwellenleiter beim Hantieren der Kassette 1 wird dadurch praktisch ausgeschlossen.

Sinngemäßes gilt für die drei anderen Faserlabyrinthe 50, welche Aufnahmeräume 50' (zwei dieser befinden sich in der Mitte der Kassette 1) nach oben hin abdecken.

Die Faserlabyrinthe 50, welche die Aufnahmeräume 50' nach oben hin begrenzen, können auch von nur zwei Laschen 51, 52 gebildet sein. Weiters ist eine Ausführungsform mit mehr als zwei Laschen möglich. Die im Ausführungsbeispiel von Fig. 1 gezeigte Anordnung von vier Faserlabyrinthen 50 und dementsprechend vier Aufnahmeräumen 50' ist nicht zwingend und es können auch mehr oder weniger als vier Faserlabyrinthe 50 vorgesehen sein.

Es ist noch darauf hinzuweisen, daß die Aufnahmeräume 50' nach oben durch das Faserlabyrinth 50 bestehend aus den Laschen 51 und 52, zur Seite durch die Wände 55 und 31 und nach unten durch die Bodenplatte 2 der Kassette 1 begrenzt werden. Um die Aufnahmeräume 50' unter den Faserlabyrinthen 50, die im Bereich der Mitte der Kassette 1 angeordnet sind, zur Seite hin zu begrenzen, sind vom Boden 2 abstehende, gebogene Stege 56 vorgesehen. Diese schützen die Lichtwellenleiter auch gegenüber den Spleißhaltern 60.

In der Kassette 1 sind noch Maßnahmen getroffen, um wenigstens einen Spleißhalter 60, in dem mehrere Spleiße festgelegt werden können, mit der Kassette 1 zu verrasten. Bei diesen Spleißhaltern 60 kann es sich um handelsübliche Spleißhalter 60 handeln, die mit einer Ausnehmung an Rastvorsprüngen 61 verrastet werden und die der gegenüberliegenden Seite an den die Laschen 51 tragenden, vom Boden 2 abstehenden Wänden 55 anliegen. Diese Spleißhalter 60 können bei Bedarf mit der Kassette 1 verrastet werden. Wenn eine Spleißhalterung 60 aus der Kassette entfernt werden soll, genügt es von unten auf die in der Bodenplatte 2 der Kassette 1 vorgesehene Zunge 61 zu drücken (Fig. 1).

Um die Kassette 1 auf einem Bauteil (z.B. einer Grundplatte, nicht gezeigt) befestigen zu können, sind Zentrierlöcher 62 vorgesehen. Die Zentrierlöcher 62 sind so ausgebildet, daß die Kassetten 1 auf Stifte an der Grundplatte mit geringem Spiel aufgesteckt werden können.

In der gezeigten Ausführungsform der Kassette 1 sind zwei voneinander getrennte Verlegekreise für Lichtwellenleiter vorgesehen.

Es ist noch darauf hinzuweisen, daß die Kassette 1 bis auf die Schnappverschlüsse 20 bezüglich ihrer Längsmittelebene und ihrer Quermittelebene spiegelsymmetrisch ausgebildet ist.

Zusammenfassend kann die Erfindung beispielsweise wie folgt dargestellt werden:

Eine Kassette 1 für die Ablage von zu wenigstens einem Spleiß führenden Lichtwellenleitern weist mehrere Einführungen 3 für die miteinander zu spleißenden Lichtwellenleiter auf. In jeder Einführung 3 sind Zugentlastungen 5 für die Lichtwellenleiter einsetzbar.

In der Kassette 1 sind mehrere Ablageräume 40 und mehrere Aufnahmeräume 50' für die zum Spleiß führenden Lichtwellenleiter vorgesehen. Die Aufnahmeräume 50' für die miteinander zu verspleißenden Lichtwellenleiter sind von oben her durch ein Faserlabyrinth 50 aus drei nebeneinander angeordneten und einander übergreifenden, verschieden hoch angeordneten Laschen 51, 52 zugänglich. Die Ablageräume 40 sind auf der der Bodenplatte 2 der Kassette 1 gegenüberliegenden Seite durch Zungen 41 geschlossen und durch lösbare Laschen 42 verschließbar. An dem Außenrand der Kassette 1 sind Schnappverschlüsse 20 über ein Filmscharnier 21 angeformt, die zum Verbinden übereinandergelegter Kassetten 1 dienen.

## Patentansprüche

1. Kassette (1) für die Ablage von wenigstens einem Spleiß von Lichtwellenleitern, mit wenigstens zwei mit Zugentlastungen (5) für Lichtwellenleiter ausgerüsteten Einführungen (3) für die Lichtwellenleiter, mit einem Ablageraum (40, 50') für die zum Spleiß führenden Lichtwellenleiter, wobei der Ablageraum (40, 50') der im Grundriß im wesentlichen rechteckig ausgebildeten Spleißkassette (1) im Bereich der beiden Schmalseiten der Spleißkassette (1) nach außen durch je eine bogenförmige Wand (30) und an den beiden Längsseiten der Spleißkassette nach außen durch je eine gebogene Wand (31) begrenzt ist, wobei im Bereich des Ablageraumes (40, 50') zum Boden (2) der Spleißkassette (1) parallel ausgerichtete und im Abstand über dem Boden angeordnete Zungen (41, 51, 52) vorgesehen sind, mit wenigstens einer Haltevorrichtung (60) für den Spleiß und vorzugsweise mit Mitteln (20) zum Verbinden übereinandergelegter Spleißkassetten (1), dadurch gekennzeichnet, daß die an den Längsseiten der Spleißkassette (1) liegenden Bereiche (50') des Ablageraums nach oben durch je ein Faserlabyrinth (50) abgeschlossen sind, das durch Zungen (51, 52) gebildet ist, die von den den Ablageraum (50') nach außen begrenzenden, gebogenen Wänden (31) und diesen gegenüberliegenden Wänden (55) in unterschiedlicher Höhe abstehen, daß die an den Schmalseiten der Spleißkassette (1) liegenden Bereiche (40) des Ablageraumes durch je eine Zunge (41), die zum Boden (2) der Spleißkassette (1) parallel ausgerichtet ist, und die von der im Bereich (40) des Ablageraums nach außen begrenzenden, bogenförmigen Wand (31) radial nach innen absteht, nach oben teilweise abgedeckt sind und daß an vom Boden (2) der Spleißkassette (1) abstehenden Wänden (43) um zum Boden (2) parallele Achsen verschwenkbare Laschen (42) vorgesehen sind, deren freie Enden durch Rastmittel (46) an den freien Enden der Zungen (41) zum Verschließen der an den Schmalseiten der Spleißkassette (1) liegenden Bereiche (40) des Ablageraumes (40, 50') festlegbar sind.

2. Spleißkassette nach Anspruch 1, bei der die Mittel zum Verbinden übereinandergelegter Spleißkassetten (1) Schnappverschlüsse (20) sind, die in Ausnehmungen in seitlichen Wänden (22) der jeweils darüberliegenden Spleißkassette (1) einrasten, dadurch gekennzeichnet, daß die Schnappverschlüsse (20) mit der Spleißkassette (1) einstückig über ein Filmscharnier (21) verbunden sind und daß die Schnappverschlüsse (20) einen zweiteilig ausgebildeten Schnappteil (23) aufweisen, wovon einer als Keil (24) und der andere als Haken (25, 27) ausgebildet ist.

3. Spleißkassette nach Anspruch 1 oder 2, dadurch gekennzeichnet, daß die Mittel (20) zum Verbinden übereinandergelegter Spleißkassetten (1) an einander diagonal gegenüberliegenden Ecken der Spleißkassette (1) vorgesehen sind.

4. Spleißkassette nach Anspruch 2 oder 3, dadurch gekennzeichnet, daß im Bereich der Ausnehmung, in welche der Schnappteil eingreift, eine Anlagekante (26) für den keilförmigen Teil (24) und eine vom Boden (2) der Spleißkassette (1) abstehende Rippe (28) für den hakenförmigen Teil (25) des Schnappteils (23) vorgesehen sind.

5. Spleißkassette nach einem der Ansprüche 1 bis 4, dadurch gekennzeichnet, daß das Faserlabyrinth (50) aus zwei nebeneinander an der Wand (55) angeordneten Zungen (51) und einer zwischen die Zungen (51) ragenden, von der gebogenen Wand (31) abstehenden Zunge (52) gebildet ist, wobei die Zungen (51, 52) einander übergreifen.

6. Spleißkassette nach Anspruch 5, dadurch gekennzeichnet, daß die an der gebogenen Wand (31) angeordnete Zunge (52) vom Boden (2) der Spleißkassette (1) einen größeren Abstand aufweist als die an der Wand (55) angeordneten Zungen (51).

7. Spleißkassette nach einem der Ansprüche 1 bis 6, dadurch gekennzeichnet, daß die Laschen (42) eine Rastöffnung (47) aufweisen, die mit einem Rastvorsprung (46), der vom Boden (2) der Spleißkassette (1) ausgeht, verrastbar ist.

8. Spleißkassette nach einem der Ansprüche 1 bis 7, dadurch gekennzeichnet, daß der Boden (2) der Spleißkassette (1) im Bereich unterhalb der von den an den Schmalseiten der Spleißkassette (1) vorgesehenen, bogenförmigen Wänden (30) abstehenden Zungen (41) durchbrochen ist.

9. Spleißkassette nach einem der Ansprüche 1 bis 8, dadurch gekennzeichnet, daß die mit der Spleißkassette (1) verrastbare Spleißhalterung (60) mehrere Aufnahmestellen für Spleiße aufweist.

10. Spleißkassette nach einem der Ansprüche 1 bis 9, dadurch gekennzeichnet, daß im Bereich der Mitte der Spleißkassette (1) wenigstens zwei weitere nach oben durch von Zungen gebildete Faserlabyrinthe (50) abgedeckte Bereiche (50) des Ablageraumes vorgesehen sind.

11. Spleißkassette nach einem der Ansprüche 1 bis 10, dadurch gekennzeichnet, daß die im Bereich der Einführungen (3) für die Lichtwellenleiter angeordneten, an die Lichtwellenleiter anlegbaren Zugentlastungen (5) mit der Spleißkassette (1) verrastbar sind.

12. Spleißkassette nach Anspruch 11, dadurch gekennzeichnet, daß die Zugentlastungen (5) in Ausnehmungen (4) im Boden (2) der Spleißkassette (1) einrastbar sind.

13. Spleißkassette nach Anspruch 12, dadurch gekennzeichnet, daß die Zugentlastung (5) über zwei in schlitzförmige Ausnehmungen (4) im Boden (2) der Spleißkassette (1) einrastbare Füße (7) festlegbar sind.

14. Spleißkassette nach einem der Ansprüche 11 bis 13, dadurch gekennzeichnet, daß die Zugentlastungen (5) über zwei Filmscharniere (8) auf sich selbst zurückfaltbar und in der gefalteten Stellung verrastbar sind.

15. Spleißkassette nach Anspruch 14, dadurch gekennzeichnet, daß auf der Innenseite der faltbaren Zugentlastungen (5) Mittel zum Festhalten der Lichtwellenleiter, vorzugsweise eine Schaumstoffauflage (12), vorgesehen ist.

16. Spleißkassette nach einem der Ansprüche 13 bis 15, dadurch gekennzeichnet, daß an dem von den Verrastungsfüßen (7) entfernten Ende (10) der Zugentlastungen (5) ein Rastvorsprung (11) vorgesehen ist, der mit dem die Verrastungsfüße (7) tragenden Teil (6) der Zugentlastungen (5) verrastbar ist.

17. Spleißkassette nach einem der Ansprüche 1 bis 16, bei der die Spleißhalterung (60) ein Loch aufweist, mit dem sie über einen, vom Boden (2) der Spleißkassette (1) aufragenden Rastvorsprung (61) druckknopfartig aufrastbar ist, dadurch gekennzeichnet, daß die Spleißhalterung (60) auf einer Seite an einer vom Boden (2) der Spleißkassette (1) aufragenden Stützwand (55), die wenigstens eine der Zungen (51) des Faserlabyrinthes (50) trägt, abgestützt ist und daß das Loch am anderen, der Stützwand (55) gegenüberliegenden Ende der Spleißhalterung (60) angeordnet ist.

18. Spleißkassette nach Anspruch 17, dadurch gekennzeichnet, daß der Rastvorsprung (61) aus drei mit dem Boden (2) der Spleißkassette (1) einstückigen, Rastnasen aufweisenden Armen gebildet ist.

19. Spleißkassette nach Anspruch 17 oder 18, dadurch gekennzeichnet, daß im Boden (2) der Spleißkassette (1) eine zum Ausrasten der Spleißhalterung (60) verformbare Zunge (62) vorgesehen ist.

## Claims

1. A box (1) for housing at least one splice between light guides, with at least two entries (3) for the light guides equipped with strain reliefs (5) for light guides, a receiving space (40, 50') for the light guides leading to the splice, wherein the receiving space (40, 50') of the splice box (1) of substantially rectangular plan is bounded on the outside in the region of each of the two narrow sides of the splice box (I) by a curved wall (30) and on the outside in the region of each of the two long sides of the splice box by a curved wall (31), wherein tongues (41, 51, 52) are provided in the region of the receiving space (40, 50), disposed parallel to the bottom (2) of the splice box (1) and spaced above the bottom, with at least one retaining device (60) for the splice and preferably with means (20) for connecting splice boxes (1) placed one upon the other,
characterized in that the regions (50') of the receiving space lying by the long sides of the splice box (1) are each closed above by a fibre labyrinth (50), which is formed by tongues (51, 52) which project at different heights from the curved walls (31) bounding the receiving space (50') on the outside and from walls (55) opposite thereto, in that each region (40) of the receiving space lying by the narrow sides of the splice box (1) is partially covered above by a tongue (41) which is aligned parallel to the bottom (2) of the splice box (1) and which projects radially inwards from the curved wall (31) bounding the housing space on the outside, and in that straps (42) are provided, projecting from walls (43) standing up from the bottom (2) of the splice box (1) and able to pivot about axes parallel to the bottom (2), with their free ends being adapted to be fixed by detent means (46) to the free ends of the tongues (41) for closing the regions (40) of the receiving space (40, 50') lying by the narrow sides of the splice box (1).

2. A splice box according to claim 1, in which the means for connecting splice boxes (1) placed one upon the other are snap connectors (20) which engage in recesses in sidewalls (22) of the respective splice boxes (1) lying above, characterized in that the snap connectors (20) are connected in one piece with the splice box (1) through a film hinge (21) and in that the snap connectors (20) comprise a snap part (23) formed in two parts, of which one is formed as a wedge (24) and the other as a hook (25, 27).

3. A splice box according to claim 1 or 2, characterized in that the means (20) for connecting splice boxes (1) lying upon one another are provided at diagonally opposite corners of the splice box (1).

4. A splice box according to claim 2 or 3, characterized in that there are provided, in the region of the recess into which the snap part engages, an abutment edge (26) for the wedge-shaped part (24) and a rib (28) projecting from the bottom (2) of the splice box (1) for the hook-shaped part (25) of the snap part (23).

5. A splice box according to any of claims 1 to 4, characterized in that the fibre labyrinth (50) is formed by two tongues (51) arranged beside one another on the wall (55) and a tongue (52) projecting between the tongues (51) and standing out from the curved wall (31), wherein the tongues (51, 52) overlap one another.

6. A splice box according to claim 5, characterized in that the tongue (52) arranged on the curved wall (31) has a greater spacing from the bottom (2) ofthe splice box (1) than the tongues (51) arranged on the wall (55).

7. A splice box according to any of claims 1 to 6, characterized in that the straps (42) have a detent opening (47), which can engage with a detent projection (46) which extends from the bottom (2) ofthe splice box (1).

8. A splice box according to any of claims 1 to 7, characterized in that the bottom (2) of the splice box (1) is apertured in the region below the tongues (41) projecting from the curved walls (30) provided at the narrow sides ofthe splice box (1).

9. A splice box according to any of claims 1 to 8, characterized in that the splice retainer (60) which can be engaged with the splice box (1) has a plurality of receiving locations for splices.

10. A splice box according to any of claims 1 to 9, characterized in that at least two further regions (50') of the receiving space are provided in the region of the middle of the splice box (1), covered above by fibre labyrinths (50) formed by tongues.

11. A splice box according to any of claims 1 to 10, characterized in that the strain reliefs (5) arranged in the region of the entries (3) for the light guides and which can be applied to the light guides can catch in engagement with the splice box (1).

12. A splice box according to claim 11, characterized in that the strain reliefs (5) can catch in engagement in recesses (4) in the bottom (2) of the splice box (1).

13. A splice box according to claim 12, characterized in that the strain relief (5) can be fixed by two feet (7) which can snap into slot-form recesses (4) in the bottom (2) of the splice box (1).

14. A splice box according to any of claims 11 to 13, characterized in that the strain reliefs (5) can be folded back on themselves through two film hinges (8) and can be engaged in the folded position.

15. A splice box according to claim 14, characterized in that means for holding the light guides fast, preferably a foam material pad (12), are provided on the inner side of the folding strain reliefs (5).

16. A splice box according to any of claims 13 to 15, characterized in that a detent projections (11) is provided on the end (10) of the stain reliefs (5) remote from the detent feet (7) and can engage with the part (6) of the strain relief (5) carrying the detent feet (7).

17. A splice box according to any of claims 1 to 16, in which the splice retainer (60) has a hole with which it can be clipped over a detent projections (61) like a pushbutton projecting from the bottom (2) of the splice box (1), characterized in that the splice retainer (60) is supported on one side on a support wall (55) projecting from the bottom (2) of the splice box (1), which wall carries at least one of the tongues (51) of the fibre labyrinth (50), and in that the hole is arranged on the other end of the splice retainer (60) opposite the support wall (55).

18. A splice box according to claim 17, characterized in that the detent projection (61) is formed from three arms having detent noses, formed in one piece with the bottom (2) of the splice box (1).

19. A splice box according to claim 17 or 18, characterized in that a deformable tongue ( 63) is provided in the bottom (2) of the splice box (1) for disengagement of the splice retainer (60).

## Revendications

1. Cassette (1) pour la réception d'au moins une épissure de guides d'ondes lumineuses, avec au moins deux entrées (3) pour les guides d'ondes lumineuses équipées de décharges de traction (5) pour des guides d'ondes lumineuses, avec un volume récepteur (40,50') pour les guides d'ondes lumineuses conduisant à l'épissure, le volume récepteur (40,50') de la cassette d'épissure (1), conformée essentiellement rectangulairement en projection horizontale, étant délimité dans la zone des deux petits côtés de la cassette d'épissure (1) vers l'extérieur par respectivement une paroi (30) arquée et, sur les deux grands côtés de la cassette d'épissure, vers l'extérieur par respectivement une paroi arquée (31), des languettes (41,51,52), dirigées parallèlement au fond (2) de la cassette d'épissure (1) et disposées à distance au-dessus du fond, étant prévues dans la zone du volume récepteur (40,50'), avec au moins un dispositif de support (60) pour l'épissure et de préférence avec des moyens (20) pour relier des cassettes d'épissure (1) disposées les unes sur les autres,
caractérisée en ce que les zones (50') du volume récepteur se trouvant sur les grands côtés de la cassette d'épissure (1) sont fermées vers le haut respectivement par un labyrinthe fibreux (50) qui est formé par des languettes (51, 52) qui sont éloignées à des hauteurs différentes des parois (31) arquées délimitant le volume récepteur (50') vers l'extérieur et des parois (55) opposées à celles-ci, que les zones (40) du volume récepteur se trouvant sur les petits côtés de la cassette d'épissure (1) sont recouvertes partiellement vers le haut respectivement par une languette (41) qui est dirigée parallèlement au fond (2) de la cassette d'épissure (1) et qui est éloignée radialement vers l'intérieur de la paroi (31) arquée délimitant vers l'extérieur dans la zone (40) du volume récepteur et que, sur les parois (43) éloignées du fond (2) de la cassette d'épissure (1) sont prévues des attaches (42) pivotant autour d'axes parallèles au fond (2), dont les extrémités libres peuvent être fixées par des moyens d'encliquetage (46) aux extrémités libres des languettes (41) pour fermer les zones (40) du volume récepteur (40,50') se trouvant sur les petits côtés de la cassette d'épissure (1).

2. Cassette d'épissure selon la revendication 1,
dans laquelle les moyens pour lier des cassettes d'épissure (1) se trouvant les unes sur les autres sont des bouchons à déclic (20) qui s'encliquètent dans des évidements de parois latérales (22) de la cassette d'épissure (1) se trouvant respectivement au-dessus,
caractérisée en ce que les bouchons à déclic (20) sont reliés d'une seule pièce à la cassette d'épissure (1) par l'intermédiaire d'une charnière mince (21) et que les bouchons à déclic (20) présentent une pièce d'encliquetage (23) conformée en deux parties dont une est réalisée sous forme de coin (24) et l'autre sous forme de crochet (25,27).

3. Cassette d'épissure selon la revendication 1 ou 2,
caractérisée en ce que les moyens (20) pour lier des cassettes d'épissure (1) disposées les unes au-dessus des autres sont prévus à des coins diagonalement opposés de la cassette d'épissure (1).

4. Cassette d'épissure selon la revendication 2 ou 3,
caractérisée en ce que sont prévues, dans la zone de l'évidement dans lequel vient en prise la pièce d'encliquetage, une arête d'appui (26) pour la partie (24) en forme de coin et une nervure (28) éloignée du fond (2) de la cassette d'épissure (1) pour la partie (25) en forme de crochet de la pièce d'encliquetage (23).

5. Cassette d'épissure selon l'une des revendications 1 à 4,
caractérisée en ce que le labyrinthe fibreux (50) est formé par deux languettes (51) disposées côte à côte sur la paroi (55) et une languette (52) en saillie entre les languettes (51) et éloignée de la paroi (31) arquée, les languettes (51, 52) mordant les unes sur les autres.

6. Cassette d'épissure selon la revendication 5,
caractérisée en ce que la languette (52) disposée sur la paroi (31) arquée présente un plus grand éloignement par rapport au fond (2) de la cassette d'épissure (1) que les languettes (51) disposées sur la paroi (55).

7. Cassette d'épissure selon l'une des revendications 1 à 6,
caractérisée en ce que les attaches (42) présentent une ouverture d'encliquetage (47) qui peut être encliquetée par une saillie d'encliquetage (46) qui part du fond (2) de la cassette d'épissure (1).

8. Cassette d'épissure selon l'une des revendications 1 à 7,
caractérisée en ce que le fond (2) de la cassette d'épissure (1) est percé dans la zone au-dessous des languettes (41) éloignées des parois (30) arquées prévues sur les petits côtés de la cassette d'épissure (1).

9. Cassette d'épissure selon l'une des revendications 1 à 8,
caractérisée en ce que le support d'épissure (60) encliquetable avec la cassette d'épissure (1) présente plusieurs emplacements récepteurs pour des épissures.

10. Cassette d'épissure selon l'une des revendications 1 à 9,
caractérisée en ce qu'au moins deux autres zones (50') du volume récepteur recouverts vers le haut par des labyrinthes fibreux (50) formés par des languettes sont prévues dans la zone du milieu de la cassette d'épissure (1).

11. Cassette d'épissure selon l'une des revendications 1 à 10,
caractérisée en ce que les décharges de traction (5) disposées dans la zone des entrées (3) pour les guides d'ondes lumineuses, pouvant être appliquées aux guides d'ondes lumineuses sont encliquetables sur la cassette d'épissures (1).

12. Cassette d'épissure selon la revendication 11,
caractérisée en ce que les décharges de traction (5) sont encliquetables dans des évidements (4) dans le fond (2) de la cassette d'épissure (1).

13. Cassette d'épissure selon la revendication 12,
caractérisée en ce que les décharges de traction (5) peuvent être fixées, par l'intermédiaire de deux pieds (7) encliquetables, dans des évidements (4) en forme de fente dans le fond (2) de la cassette d'épissure (1).

14. Cassette d'épissure selon l'une des revendications 11 à 13,
caractérisée en ce que les décharges de traction (5) sont repliables sur elles-mêmes et encliquetables en position repliée par l'intermédiaire de deux charnières minces (8).

15. Cassette d'épissure selon la revendication 14,
caractérisée en ce que des moyens pour le maintien des guides d'ondes lumineuses, de préférence une couche en matériau cellulaire (12), sont prévus sur la face intérieure des décharges de traction (5) repliables.

16. Cassette d'épissure selon l'une des revendications 13 à 15,
caractérisée en ce qu'une saillie d'encliquetage (11), qui est encliquetable avec la partie (6) des décharges de traction (5) portant les pieds d'encliquetage (7), est prévue à l'extrémité (10) des décharges de traction (5) éloignée des pieds d'encliquetage (7).

17. Cassette d'épissure selon l'une des revendications 1 à 16,
dans laquelle le support d'épissure (60) présente un orifice par lequel elle est encliquetable à la manière d'un bouton-pression par l'intermédiaire d'une saillie d'encliquetage (61) en saillie depuis le fond (2) de la cassette d'épissure (1),
caractérisée en ce que le support d'épissure (60) est appuyé d'un côté sur une paroi d'appui (55) en saillie depuis le fond (2) de la cassette d'épissure (1), qui porte au moins une des languettes (51) du labyrinthe fibreux (50) et que l'orifice est disposé à l'extrémité du support d'épissure (60) opposée à la paroi d'appui (55).

18. Cassette d'épissure selon la revendication 17,
caractérisée en ce que la saillie d'encliquetage (61) est formée par trois bras présentant des nez d'encliquetage, d'une seule pièce avec le fond (2) de la cassette d'épissure (1).

19. Cassette d'épissure selon la revendication 17 où 18,
caractérisée en ce qu'une languette (63) déformable est prévue dans le fond (2) de la cassette d'épissure (1) pour désencliqueter le support d'épissure (60).
